# EUROPÄISCHE PATENTSCHRIFT

(11) **EP 1 831 290 B1**
(45) Veröffentlichungstag und Bekanntmachung des Hinweises auf die Patenterteilung: **18.03.2009**
(21) Anmeldenummer: 05822864.4
(22) Anmeldetag: 17.12.2005
(51) Int. Cl.: C08J 3/20, C08K 3/14

(54) **KUNSTSTOFFMATERIAL**
PLASTIC MATERIAL
MATIERE PLASTIQUE

(30) Priorität: 20.12.2004 DE 102004062799
(43) Veröffentlichungstag der Anmeldung: 12.09.2007
(73) Patentinhaber: Ensinger Kunststofftechnologie GbR, 71154 Nufringen (DE)
(72) Erfinder: ENSINGER, Wilfried, 71154 Nufringen (DE); RESAVAGE, Lawrence, G., Bethel Park, PA 15102 (US)
(74) Vertreter: Wössner, Gottfried
(86) Internationale Anmeldenummer: PCT/EP2005/013620
(87) Internationale Veröffentlichungsnummer: WO 2006/066837

(56) Entgegenhaltungen:
- EP-A- 0 095 007
- WO-A-20/06055198
- US-A- 4 876 423
- US-A- 5 447 893
- US-A- 5 997 894
- PATENT ABSTRACTS OF JAPAN Bd. 2003, Nr. 03, 5. Mai 2003 (2003-05-05) & JP 2002 343606 A (NEC TOKIN CORP), 29. November 2002 (2002-11-29)
- PATENT ABSTRACTS OF JAPAN Bd. 018, Nr. 128 (C-1174), 2. März 1994 (1994-03-02) & JP 05 311502 A (UNITIKA LTD), 22. November 1993 (1993-11-22)
- PATENT ABSTRACTS OF JAPAN Bd. 2003, Nr. 12, 5. Dezember 2003 (2003-12-05) & JP 2004 115747 A (KYOCERA CHEMICAL CORP), 15. April 2004 (2004-04-15)
- PATENT ABSTRACTS OF JAPAN Bd. 017, Nr. 442 (C-1097), 16. August 1993 (1993-08-16) & JP 05 098068 A (TOKAI CARBON CO LTD), 20. April 1993 (1993-04-20)

## Beschreibung

Die Erfindung betrifft ein Kunststoffmaterial, welches sich generell zur Herstellung von tribologisch beanspruchten Bauteilen, insbesondere auch von Halteringen zum Halten von Halbleiterwafern in chemisch-mechanischen Poliervorrichtungen, eignet, hieraus hergestellte Bauteile sowie ein Verfahren zu deren Herstellung.

Die tribologisch beanspruchten Bauteile, für deren Herstellung sich das erfindungsgemäße Kunststoffmaterial eignet, sind vielfältig. Hierzu gehören unter vielen anderen beispielsweise Umlenkrollen, Führungselemente und andere gleitreibungsbelastete Bauteile, die bei der Drahtherstellung und der Drahtbeschichtung zum Einsatz kommen. Ferner sind Flügel und Leitschaufeln von Turbinen und Generatoren, Rotorteile für Kompressoren und Vakuumpumpen zu nennen.

Ferner sind Führungsbuchsen, Flächenlager und dergleichen typische Einsatzgebiete für das erfindungsgemäße Kunststoffmaterial.

Auch Kolbendichtungen und Führungsteile für ballistische Körper sind Bauteile, für deren Herstellung das erfindungsgemäße Kunststoffmaterial sehr gut geeignet ist.

Halteringe der eingangs beschriebenen Art werden zum Beispiel in dem US-Patent 6,251,215 beschrieben und gehören ebenfalls zu den Bauteilen, bei denen das erfindungsgemäße Kunststoffmaterial mit erheblichen Vorteilen Verwendung finden kann. Halteringe sind ein extremes Beispiel für tribologisch hoch belastete Bauteile, weshalb die Beschreibung der vorliegenden Erfindung zu weiten Teilen anhand der Problematik der Halteringe erfolgt.

Heutzutage werden integrierte Schaltkreise typischerweise auf Halbleitersubstraten, insbesondere Siliziumwafern, hergestellt, wobei nacheinander leitende, halbleitende und isolierende Schichten auf dem Wafer abgeschieden werden. Nachdem jede Schicht abgelagert ist, wird geätzt, um die Schaltkreisfunktionen zu realisieren. Nachdem eine Reihe von Lagen sequenziell gelagert und geätzt wurde, wird die oberste Oberfläche des Halbleitersubstrates, d.h. die außenliegende Oberfläche des Substrates, mehr und mehr uneben. Diese unebene Oberfläche bereitet in photolitographischen Schritten beim Herstellungsprozess der integrierten Schaltkreise Probleme. Deshalb besteht die Notwendigkeit immer wieder, die Oberfläche des Halbleitersubstrates plan zu machen bzw. einzuebnen.

Hierfür stellt das sogenannte chemisch-mechanische Polieren (CMP) eine der anerkannten Methoden dar. Dieses Verfahren zur Erzielung der Planheit verlangt typischerweise, dass das Substrat, d.h. der Halbleiterwafer, auf einem Träger oder auch Polierkopf montiert wird. Die freiliegende Oberfläche des Substrates wird dann gegen eine rotierende Polierscheibe gedrückt. Über den Trägerkopf wird eine geregelte Kraft auf das Substrat ausgeübt, um dieses gegen die Polierscheibe zu drücken. Ein Poliermittel, welches mindestens ein chemisch reaktives Agens und abrasive Partikel enthält, wird auf die Oberfläche der Polierscheibe gegeben.

Einer der bedeutendsten Kostenfaktoren bei dem CMP ist der Austausch verschlissener Halteringe, da dies erhebliche Maschinenstillstandszeiten zur Folge hat.

Gegenüber der US-Patentschrift 6,251,215 deutlich verbesserte und insbesondere auch einfacher und schneller austauschbare Halteringe sind in den US-Patentanmeldungen US 2004-0065412 A und US 2004-0067723 A vorgeschlagen worden, auf die vollinhaltlich Bezug genommen wird.

Eine Verminderung des Abriebs der Halteringe während dem CMP hat aber trotz dieser erzielten Verbesserungen eine große Bedeutung für die Wirtschaftlichkeit der Waferherstellung.

Aus der EP 0 095 007 A1 sind Gleithülsen zur Aufnahme von Spikes in Kraftfahrzeugreifen bekannt, bei denen die Hülse aus einem temperaturresistenten Kunststoff, z.B. Polyamid, besteht, der mindestens 40 Volumenprozent Hartstoffpartikel eingelagert enthält. Als Hartstoffpartikel wird beispielsweise Titancarbid empfohlen.

Aufgabe der vorliegenden Erfindung ist es ein Kunststoffmaterial für die Herstellung von tribologisch beanspruchten Bauteilen, insbesondere von Halteringen, vorzuschlagen, mit denen merklich längere Standzeiten der Bauteile erhalten werden können.

Diese Aufgabe wird durch das in Anspruch 1 definierte Kunststoffmaterial gelöst.

TiC ist ein sehr hartes Material (Vickers Härte 3400), so dass bei dessen Verwendung als Zusatzstoff zu Kunststoffmaterialien, die einer Gleitreibungsapplikation zugeführt werden, wie dies beim CMP der Fall ist, eher Probleme aufgrund steigender Abrasion erwartet werden als die Lösung des Problems zu geringer Standzeiten des Kunststoffmaterials. Überraschenderweise lässt sich TiC so in eine Kunststoffmatrix einbinden, dass Bauteile mit erheblich verbesserten Gleitreibungseigenschaften und Standzeiten erhalten werden.

Vorteilhaft ist dabei auch der lineare thermische Ausdehnungskoeffizient von TiC, der bei 0,02 % bei 315 °C liegt, so dass die Kunststoffmatrix unter den von der jeweiligen Applikation resultierenden Erfordernissen ausgewählt und gegebenenfalls weiter modifiziert werden kann, ohne dass hierbei auf die TiC-Partikel Rücksicht genommen werden müsste. Ebenso wirkt sich deren geringe thermische

Leitfähigkeit von ca. 0,041 cal/sec cm °C auf die TiC-haltigen erfindungsgemäßen Kunststoffmaterialien günstig aus. Hierdurch verhindert man, dass die in Gleitreibungsapplikationen auftretende Wärme schnell an die umgebende Kunststoffmatrix weitergeleitet wird.

Erstaunlicherweise findet man bei der erfindungsgemäßen Einbettung der TiC-Partikel in eine Kunststoffmatrix eine ausgeprägte Verminderung des Verschleißes der aus dem Kunststoffmaterial hergestellten Bauteile.

Bei den Halteringen sorgen vorzugsweise in deren Oberfläche eingearbeitete, zur Polierfläche der CMP-Apparatur hin offene und vom Innenraum des Rings bis zu dessen Außenumfang verlaufende Nuten dafür, dass entstehender Abrieb des Halterings zusammen mit Poliermasse nach außen abgeschleudert wird und die Wafer damit vor einem Kontakt mit dem TiC-haltigen Abrieb bewahrt wird.

Das erfindungsgemäß verwendete Kunststoffmaterial für die Kunststoffmatrix ist bevorzugt ausgewählt aus Polyetheretherketon, Polyphenylensulfid, Polyparaphenylen, PTFE-modifiziertem Polyetheretherketon, PFA-modifiziertem PTFE, Polyetherketonketon, Polyalkylenterephthalat, Polyimid, Polyamidimid und Polysulfon, insbesondere Polyphenylensulfon und Polyethersulfon.

Diese Materialien eignen sich insbesondere für die Einbettung der TiC-Partikel und zeigen von Hause aus günstige Eigenschaften als Kunststoffmaterial für die tribologisch belasteten Bauteile und insbesondere die CMP-Anwendung. Ferner lassen sich diese Materialien gut verarbeiten.

Der Gehalt an TiC-Partikeln in der Kunststoffmatrix lässt sich in weiten Grenzen variieren. So zeigen sich bereits bei einem Gehalt von 3 Gew.-% zufriedenstellende Wirkungen bei selbstverstärkenden Kunststoffen, wie dem Polyparaphenylen. Bei Kunststoffen ohne selbstverstärkende Effekte empfehlen sich für optimale Verschleißresistenz jedoch Gehalte von 10 Gew.-% oder mehr.

In der Regel wird man aufgrund der Kosten der TiC-Partikel einerseits und tribologischen Gesichtspunkten andererseits den Gehalt der TiC-Partikel auf maximal 30 Gew.-% beschränken. Hohe Gehalte können sich insbesondere dann empfehlen, wenn die Kosten des Kunststoffmaterials für die Matrix höher liegen als die Kosten für die TiC-Partikel, die dann neben der Verschleißminderung auch noch den Effekt mit sich bringen das Kunststoffmaterial zu verbilligen. Für viele Anwendungen lässt sich mit einem Anteil von 20 Gew.-% oder weniger ein gutes Eigenschaftsspektrum in den hergestellten Bautellen erzielen.

Bei Anwendungen, bei denen hohe Temperaturen entstehen, erzielt man mit Gehalten von 15 bis 25 Gew.-% sehr gute Resultate, weiter bevorzugt ist der Bereich von 20 bis 25 Gew.-%.

Das TiC-Material wird in feinteiliger Form verwendet, d.h. mit Partikelgrößen kleiner 10 µm mit mittleren Partikelgrößen von 1 bis 2 µm, bevorzugt 1,2 bis 1,4 µm.

Diese Partikelgrößen sind einerseits klein genug um keine Störungen zu verursachen und andererseits ausreichend groß um die Abriebbeständigkeit deutlich zu verbessern.

Die bevorzugte Partikelform der TIC-Partikel ist granular, insbesondere sphärisch.

Für viele Anwendungen sind TiC-Partikel mit glatter, d.h. nichtzerklüfteter Oberfläche vorteilhaft.

Um eine besonders gute Einbettung der TiC-Partikel in die Kunststoffmatrix zu gewährleisten werden diese bevorzugt mit einem Haftvermittler behandelt, bevor diese in das Kunststoffmaterial eingearbeitet werden. Bevorzugt werden die Partikel mit einer Haftvermittlerschicht versehen.

Alternativ oder ergänzend kann vorgesehen sein, dass die TiC-Partikel partiell fluoriert sind. Auch hierdurch lässt sich die Bindung an eine Kunststoffmatrix verbessern.

Als Haftvermittler eignen sich insbesondere Polymermaterialien, die einerseits mit dem TiC und andererseits mit dem jeweils ausgewählten Kunststoffmaterial der Matrix kompatibel sind. Bevorzugte Haftvermittlerschichten umfassen ein fluorhaltiges Polymer. Ergänzend oder alternativ kann der Haftvermittler Gruppen umfassen, die sich mit dem Kunststoffmaterial der Matrix zur Reaktion bringen lassen, so dass eine kovalente Bindung zwischen dem Haftvermittler und dem Matrix-Kunststoffmaterial herstellen lässt.

Die Erfindung betrifft des weiteren Bauteile, insbesondere Halteringe für Halbleiterwafer, die unter Verwendung des zuvor beschriebenen Kunststoffmaterials hergestellt sind.

Die erfindungsgemäßen Bauteile benötigen nicht zwingend eine homogene Verteilung der TiC-Partikel in der Kunststoffmatrix, obwohl dies fertigungstechnisch häufig die einfachere Ausgestaltung darstellt.

Bevorzugt werden die TiC-Partikel in der Kunststoffmatrix benachbart zu abrasiv belasteten Oberflächenbereichen der Bauteile in einem höheren Gehalt vorhanden sein als in Bereichen, die keinen abrasiven Belastungen ausgesetzt sind.

Ergänzend oder alternativ können radial innen liegenden Bereiche der Bauteile einen geringeren Gehalt (abgestuft oder kontinuierlich abnehmend) an TiC-Partikeln aufweisen oder sogar weiter bevorzugt im Wesentlichen frei von TiC-Partikeln sein. Dies hat den weiteren Vorzug, dass der Einsatz von TiC-Partikeln beschränkt wird auf die Bereiche des Bauteils, die einer abrasiven Belastung ausgesetzt sind, und dass ein unerwünschter Kontakt, beispielsweise bei Halteringen mit der Halbleiterwafer, mit TiC-Partikeln praktisch ausgeschlossen werden kann.

Bauteile, insbesondere Halteringe, die letzterer Ausführungsform zugehören, können beispielsweise mit einer Verschleißschicht versehen sein, die sich von einem rohrförmigen Halbfabrikat ableitet, welches durch Koextrusion einer TiC-freien Innenwandung und einer konzentrischen TiC-haltigen Außenwandung hergestellt ist.

Selbstverständlich lassen sich die unterschiedlichen Gehalte an TiC-Partikeln in der Verschleißschicht der Bauteile auch mit anderen Herstellungsverfahren realisieren, wie z.B. einem Sinterprozess.

Die Erfindung betrifft ferner ein Verfahren zur Herstellung von Bauteilen, wie es in den Ansprüchen 17 und 18 definiert ist.

Bei den Herstellungsverfahren ist von Bedeutung, dass die TiC-gefüllten Kunststoffmaterialien nach der Ausformung einer gezielten Temperaturführung unterworfen werden, um einerseits einen vorgegebenen Kristallisationsgrad des Matrixkunststoffmaterials zu erzielen und andererseits Spannungen in dem Bauteil zu minimieren.

Diese und weitere Vorteile der Erfindung werden im Folgenden im Zusammenhang mit den Beispielen und der Zeichnung noch näher erläutert.

### Abrieb- und Verschleißtest

Für die in den folgenden Beispielen beschriebenen Kunststoffmaterialien wurden mit einer so genannten Buehler-Maschine (Buehler Phoenix 4000 Typ 49-4101-260 der Buehler Ltd. Lake Bluff, Illinois USA) unter folgenden Bedingungen die Abrieb- und Verschleißwerte ermittelt:
Poliermedium (Slurry):
Semisperse SS-12 Oxide Slurry der Fa. Cabot Microelectronics, Research and Technology Center Aurora, Illinois, USA

Als Polierscheibe wurde eine Urethangleitplatte vom Typ Rodel CR1C1400-A-3 der Fa. Rohm & Haas CMP Development Center, Newark, Delaware, USA verwendet.

Die Buehler-Maschine wurde mit 150 rpm Gegenrotation betrieben, der Auflagedruck des Halterings gegenüber der Gleitplatte betrug 3,8 psi bei einer Drehgeschwindigkeit von 196,25 ft./min.

### Probekörper

Zu Testzwecken wurde aus den jeweiligen Kunststoffmaterialien ein Kunststoffring mit einem Außen-Durchmesser von 320 mm und einem Innendurchmesser von 290 mm und einer Höhe von 12 mm aus einem extrudierten Hohlstab gefertigt, wobei bei der Verwendung erfindungsgemäßer Kunststoffmaterialien jeweils eine homogene Verteilung der TiC-Partikel in der Kunststoffmatrix vorgesehen ist.

Als TiC-Partikel kamen Fluorpolymer-beschichtete TiC-Partikel zum Einsatz, die von Pacific Particulate Materials Ltd. (Port Coquitlam, B.C. Canada) unter der Bezeichnung TiC-2201 vertrieben werden. Diese TiC-Partikel haben eine sehr enge Partikelgrößenverteilung von 1,2 bis 1,4 µm.

Die TiC-Partikel wurden zunächst mit dem Kunststoffmaterial für die Matrix der Ringe compoundiert und hernach das Compound durch Extrudieren zu Hohlstäben verarbeitet, von denen dann die Ringe abgetrennt wurden. Die Hohlstäbe wurden einer Temperung unterzogen, um die Kristallinität zu beeinflussen und um im Material vorhandene Spannungen abzubauen.

Die Temperungsbedingungen für PEEK- und PPS-basierende Materialien waren die folgenden:

| | |
|---|---|
| Aufheizen: | 3 h bei 120° C Ofentemperatur |
| | 4 h bei 220° C Ofentemperatur |
| | |
| Haltezeit bei 220° C: | 1 ½ h pro cm Wanddicke |
| | |
| Abkühlrate: | 20° C/h bis eine Temperatur von 40° C erreicht ist |

### Beispiel 1:

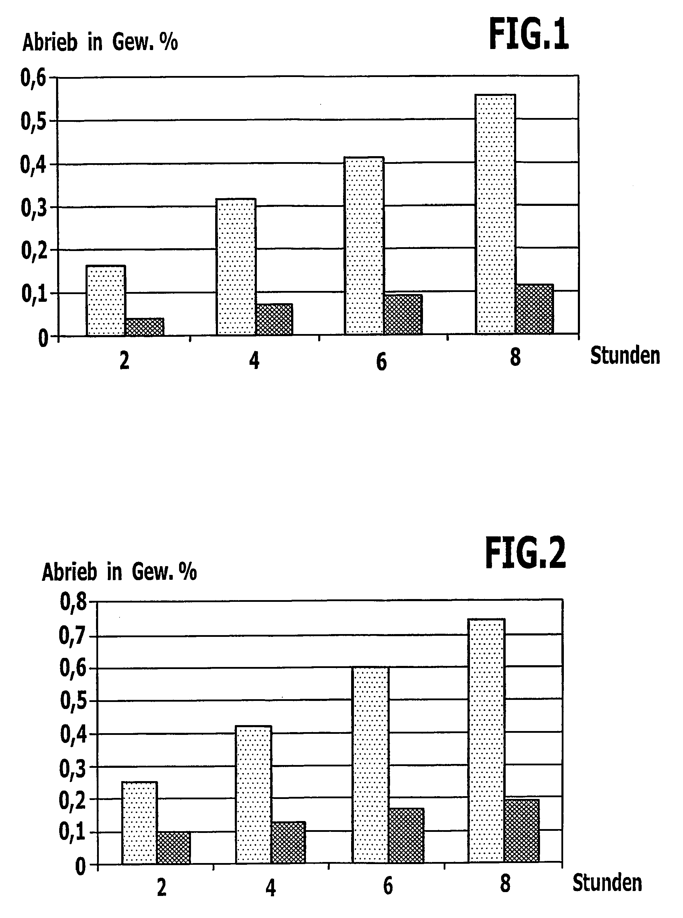

In diesem Beispiel wurde das Abriebverhalten von Kunststoffringen aus Standard PPS und PPS mit einem Anteil von 22 Gew.-% TiC-Partikeln untersucht. Die Daten der Tests sind in Figur 1 dargestellt, wobei in dem Diagramm jeweils die linke Säule das Ergebnis des aus Standard-PPS gefertigten Rings und die rechte Säule die erfindungsgemäß aus mit TiC-Partikeln gefülltem PPS gefertigten Ringe repräsentiert.

Im Ergebnis ist festzustellen, dass der Abrieb bei den erfindungsgemäßen Ringen selbst nach acht Stunden Test noch erheblich geringer ausfällt als bei den aus Standard PPS beobachteten Werten nach einer Stunde Test.

### Beispiel 2:

In diesem Beispiel wurde das Abriebverhalten von Kunststoffringen aus Standard PEEK und PEEK mit einem Anteil von 22 Gew.-% TiC-Partikeln untersucht. Die Daten der Tests sind in Figur 2 dargestellt, wobei in dem Diagramm jeweils die linke Säule das Ergebnis des aus Standard-PEEK gefertigten Rings und die rechte Säule das Ergebnis des erfindungsgemäß aus mit TiC-Partikeln gefülltem PEEK gefertigten Ring repräsentiert.

Im Ergebnis ist festzustellen, dass der Abrieb bei den erfindungsgemäßen Ringen selbst nach acht Stunden Test noch erheblich geringer ausfällt als bei den aus Standard PEEK beobachteten Werten nach einer Stunde Test.

Die Abriebwerte lagen zwar etwas über den bei den PPS-Materialien beobachteten Werten, jedoch immer noch um ein Mehrfaches unter den Abriebswerten, die für den aus ungefülltem Standard-PPS-Material hergestellten Ring erhalten wurden.

### Beispiel 3:

Hier wurde als Kunststoffmaterial ein sogenanntes selbstverstärkendes Polymer, nämlich Polyparaphenylen verwendet und die Anteile an TiC-Partikeln wurden variiert. Zum Einsatz kamen für die erfindungsgemäßen Ringe 5,5 Gew.-%, 11 Gew.-% und 22 Gew.-%.

Hier zeigt sich ein drastischer Effekt in der Verminderung des Abriebs bereits bei 5,5 Gew.-% TiC-Partikel. Bei höheren Gehalten nimmt der Abrieb zunächst wieder zu (11 Gew.-%), während bei der weiteren Steigerung der TiC-Gehalte (22 Gew.-%) der Abrieb wieder vermindert wird. Diese Besonderheit wird bei selbstverstärkenden Polymeren beobachtet. Ähnliche Verhältnisse dürften wohl bei faserverstärkten Kunststoffen zu beobachten sein, die sich jedoch für die Herstellung von Halteringen für Halbleiterwafer nicht aufdrängen.

### Beispiel 4:

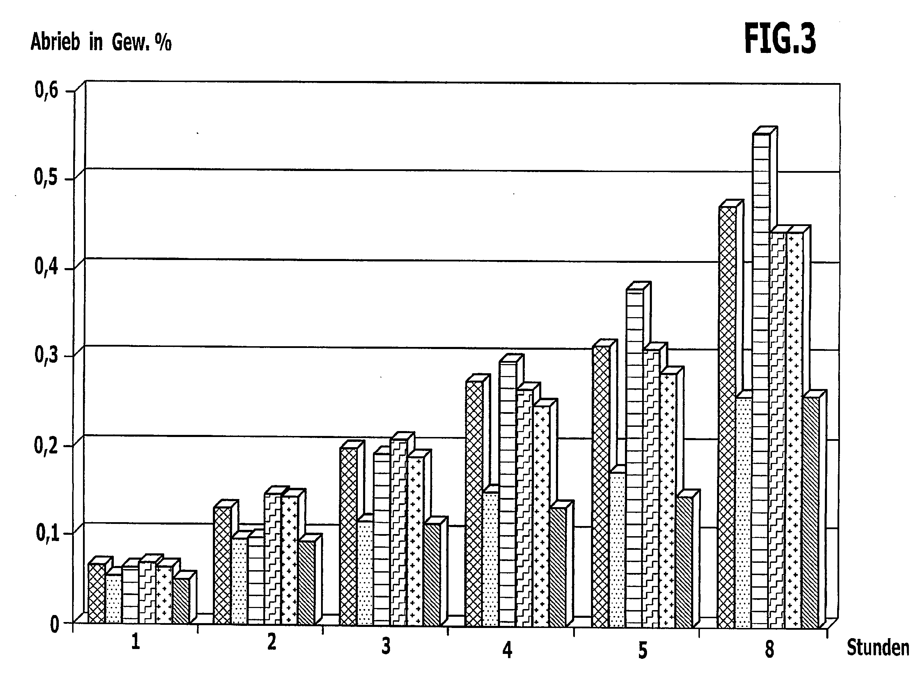

In diesem Beispiel werden zum Vergleich die Abriebswerte verschiedener Hochleistungskunststoffe gegenübergestellt. Die Abriebsdaten sind in Figur 3 zusammengefasst, wobei die den Abrieb anzeigenden Säulen in der Reihenfolge von links nach rechts folgende Kunststoffe repräsentieren:
Standard PPS
PET
PEEK
PEEK mit 10 Gew.-% PTFE
PEKK
Polyparaphenylen.

Aus dem Diagramm der Figur 3 ergeben sich für den Kunststoff PET schon vergleichsweise gute Werte, die sich durch den Einsatz des Füllstoffs TiC erfindungsgemäß weiter verbessern lassen.

PET eignet sich als Matrixmaterial für die Halteringe, allerdings nur für einfache Halbleiterstrukturen, wie z.B. bei Speicherchips, während die Hochleistungskunststoffe PPS, PEEK und Polyparaphenylen bei komplexen Halbleiterstrukturen, wie z.B. bei Prozessorchips, bevorzugt werden.

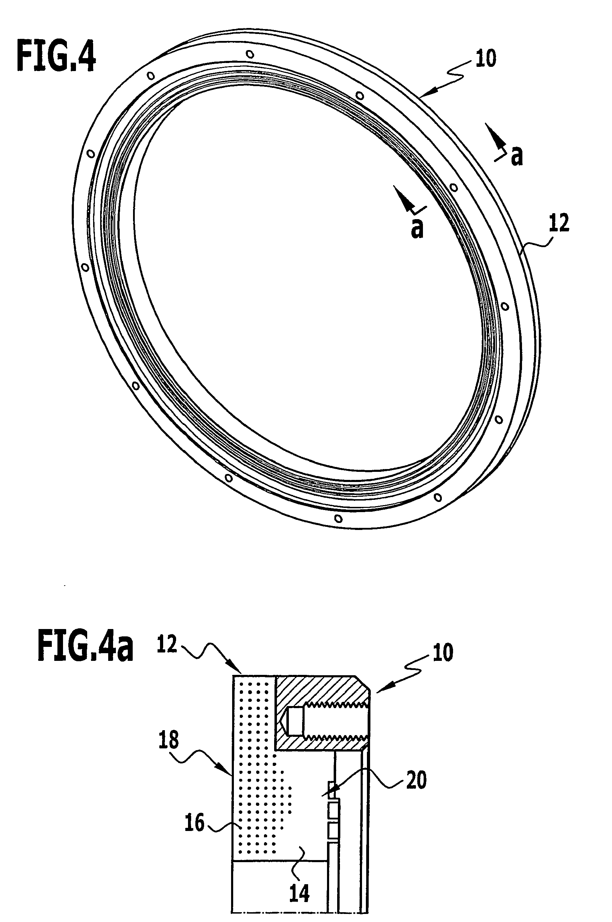

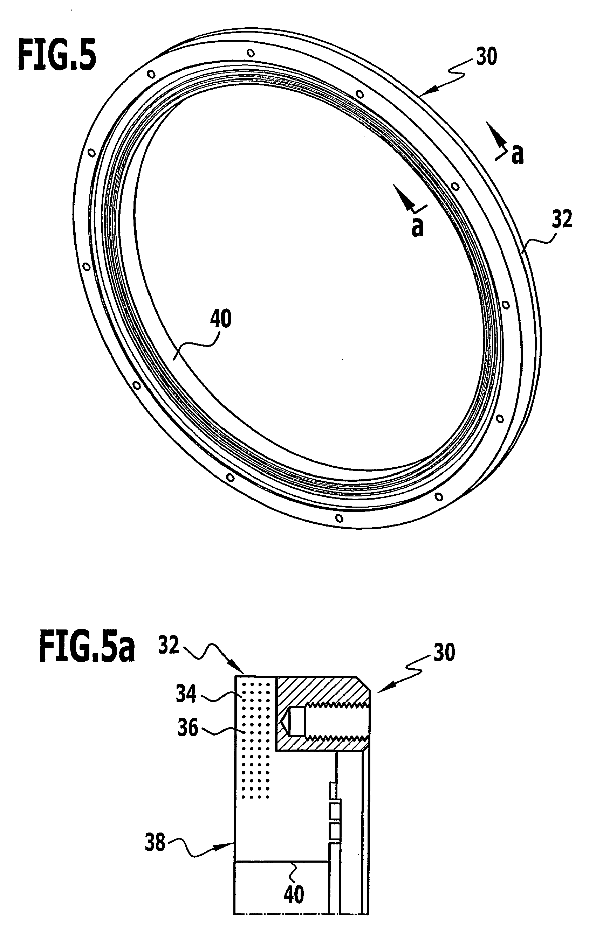

Die Figuren 4 und 5 zeigen schließlich schematisch erfindungsgemäße Halteringe 10 bzw. 30, die eine Verschleißschicht 12 bzw. 32 aufweisen, welche eine Kunststoffmatrix 14 bzw. 34 aufweisen in die TiC-Partikel 16 bzw. 36 eingelagert sind.

Der in Figur 4 (mit vergrößerter Schnittdarstellung in Figur 4a) gezeigte Haltering 10 weist in der Verschleißschicht einen TiC-Partikel-Gehalt auf, der benachbart zur abrasiv beanspruchten Oberfläche 18 größer ist als in Bereichen 20, die einer Abrasion nicht ausgesetzt sind.

Bei Kunststoffen, die vom Rohmaterialpreis her günstiger sind als das TiC-Material empfiehlt sich diese Partikelverteilung. Ist der Materialpreis für den Hochleistungskunststoff, der die Matrix bildet, höher als der Preis des TiC-Materials kann unter dem Gesichtspunkt der Kostenminimierung selbstverständlich ohne Nachteil im gesamten Querschnitt der Verschleißschicht ein einheitlicher Gehalt an TiC-Partikeln verwendet werden.

Figur 5 (mit vergrößerter Schnittdarstellung in Figur 5a) zeigt den Haltering 30 mit einer weiter modifizierten TiC-Partikelverteilung, wobei in Bereichen 38 benachbart zur Innenoberfläche 40 des Halterings 30 die TiC-Partikel entfallen, um die Sicherheit, dass die innerhalb des Halterings angeordnete Wafer 42 nicht mit den im Abrieb enthaltenen TiC-Partikeln in Berührung kommen, zu erhöhen.

Die Figuren 4 und 5 zeigen jeweils einteilige Halteringe gemäß der US-Patentanmeldung US 2004-0065412 A. Es versteht sich, dass sich die erfindungsgemäßen Kunststoffmaterialien genauso gut und mit demselben Erfolg bezüglich der Verbesserung des Abrieb- und Verschleißverhaltens auch bei einteiligen Halteringen gemäß der US-Patentanmeldung 2004-0067723 A einsetzen lassen.

## Patentansprüche

1. Kunststoffmaterial zur Herstellung von tribologisch beanspruchten Bauteilen, wobei das Kunststoffmaterial eine Kunststoffmatrix und darin eingebettet partikelförmiges TiC mit einer mittleren Partikelgröße im Bereich von 1 bis 2 µm umfasst, wobei der Gehalt an TiC in dem Kunststoffmaterial 3 bis 30 Gew.-% beträgt, und wobei das Kunststoffmaterial ausgewählt ist aus Polyetheretherketon, Polyphenylensulfid, Polyparaphenylen, PTFE-modifiziertem Polyetheretherketon, PFA-modifiziertem PTFE, Polyetherketonketon, Polyalkylenterephthalat, Polyimid, Polyamidimid und Polysulfon.

2. Kunststoffmaterial nach Anspruch 1, **dadurch gekennzeichnet, dass** das Kunststoffmaterial ausgewählt ist aus Polyphenylensulfon und Polyethersulfon.

3. Kunststoffmaterial nach Anspruch 1, oder 2, **dadurch gekennzeichnet, dass** der Gehalt an TiC in dem Kunststoffmaterial bis zu 25 Gew.-% beträgt.

4. Kunststoffmaterial nach Anspruch 3, **dadurch gekennzeichnet, dass** der Gehalt an TiC in dem Kunststoffmaterial bis zu 20 Gew.-% beträgt.

5. Kunststoffmaterial nach Anspruch 3, **dadurch gekennzeichnet, dass** der Gehalt an TiC in dem Kunststoffmaterial 20 bis 25 Gew.-% beträgt.

6. Kunststoffmaterial nach einem der voranstehenden Ansprüche, **dadurch gekennzeichnet, dass** das partikelförmige TiC eine mittlere Partikelgröße von 1,2 bis 1,4 µm aufweist.

7. Kunststoffmaterial nach einem der voranstehenden Ansprüche, **dadurch gekennzeichnet, dass** das partikelförmige TiC an der Oberfläche der Partikel eine Haftvermittlerschicht aufweist.

8. Kunststoffmaterial nach Anspruch 7, **dadurch gekennzeichnet, dass** die Haftvermittlerschicht ein organisches Polymer umfasst.

9. Kunststoffmaterial nach einem der Ansprüche 1 bis 8, **dadurch gekennzeichnet, dass** die TiC-Partikel partiell fluoriert sind.

10. Kunststoffmaterial nach einem der voranstehenden Ansprüche, **dadurch gekennzeichnet, dass** die TiC-Partikel granulare Partikel sind.

11. Kunststoffmaterial nach einem der voranstehenden Ansprüche, **dadurch gekennzeichnet, dass** die TiC-Partikel eine glatte Oberfläche aufweisen.

12. Kunststoffmaterial nach Anspruch 1, **dadurch gekennzeichnet, dass** als Kunststoffmaterial für die Matrix ein selbstverstärkender Kunststoff, insbesondere Polyparaphenylen, ausgewählt ist und dass der Gehalt an TiC-Partikeln 3 bis 8 Gew.-% beträgt.

13. Bauteil mit einer Verschleißschicht, hergestellt unter Verwendung eines Kunststoffmaterials gemäß einem der Ansprüche 1 bis 12.

14. Bauteil nach Anspruch 13, **dadurch gekennzeichnet, dass** der Gehalt an partikelförmigern TiC benachbart zu abrasiv belasteten Oberflächenbereichen des Bauteils höher ist als in Bereichen, die keinen abrasiven Belastungen ausgesetzt sind.

15. Bauteil nach einem der Ansprüche 13 bis 14, **dadurch gekennzeichnet, dass** das Bauteil ein Haltering für Halbleiterwafer ist.

16. Bauteil nach Anspruch 15, **dadurch gekennzeichnet, dass** die Verschleißschicht benachbart zur radial innen gelegenen Oberfläche des Halterings im Wesentlichen frei von TiC-Partikeln ist.

17. Verfahren zur Herstellung eines Bauteils gemäß einem der Ansprüche 13 bis 16, **gekennzeichnet durch** die Schritte:
a) Compoundieren des für die Matrix ausgewählten Kunststoffmaterials mit dem partikelförmigen TiC;
b) Aufbereiten des compoundierten Kunststoffmaterials zu einem sinterfähigen Granulat;
c) Sintern des in Schritt b) erhaltenen Granulats bei einer vorgegebenen Sintertemperatur zu einer Verschleißschicht;
d) gesteuertes Abkühlen des gesinterten Materials von der Sintertemperatur zur Erzielung eines vorgegebenen Kristallisationsgrades und zum Abbau von Spannungen in der Verschleißschicht.

18. Verfahren zur Herstellung eines Bauteils gemäß einem der Ansprüche 13 bis 16, **gekennzeichnet durch** die Schritte:
a) Compoundieren des für die Matrix ausgewählten Kunststoffmaterials mit dem partikelförmigen TiC;
b) Extrudieren des compoundierten Materials zu einer Verschleißschicht;
c) Temperung der extrudierten Verschleißschicht zur Erzielung eines vorgegebenen Kristallisationsgrades und zum Abbau von Spannungen in der Verschleißschicht.

## Claims

1. Plastic material for the production of tribologically worn components, the plastic material containing a plastic matrix and particulate TiC with an average particle size ranging from 1 to 2 µm embedded therein, the amount of TiC in the plastic material being 3 to 30 % by weight, and the plastic material being selected from polyether ether ketone, polyphenylene sulfide, polyparaphenylene, PTFE-modified polyether ether ketone, PFA-modified PTFE, polyether ketone ketone, polyalkylene terephthalate, polyimide, polyamide imide and polysulfone.

2. Plastic material as defined in claim 1, **characterized in that** the plastic material is selected from polyphenylene sulfone and polyether sulfone.

3. Plastic material as defined in claim 1 or 2, **characterized in that** the amount of TiC in the plastic material is up to 25 % by weight.

4. Plastic material as defined in claim 3, **characterized in that** the amount of TiC in the plastic material is up to 20 % by weight.

5. Plastic material as defined in claim 3, **characterized in that** the amount of TiC in the plastic material is 20 to 25 % by weight.

6. Plastic material as defined in any one of the preceding claims, **characterized in that** the particulate TiC has an average particle size of 1.2 to 1.4 µm.

7. Plastic material as defined in any one of the preceding claims, **characterized in that** the particulate TiC has a layer of adhesion agent on the surface of the particles.

8. Plastic material as defined in claim 7, **characterized in that** the layer of adhesion agent contains an organic polymer.

9. Plastic material as defined in any one of claims 1 to 8, **characterized in that** the TiC particles are partially fluorinated.

10. Plastic material as defined in any one of the preceding claims, **characterized in that** the TiC particles are granular particles.

11. Plastic material as defined in any one of the preceding claims, **characterized in that** the TiC particles have a smooth surface.

12. Plastic material as defined in claim 1, **characterized in that** a self-reinforcing plastic, in particular, polyparaphenylene is selected as plastic material for the matrix, and **in that** the amount of TiC particles is 3 to 8 % by weight.

13. Component with a wear and tear layer, produced with the use of a plastic material in accordance with any one of claims 1 to 12.

14. Component as defined in claim 13, **characterized in that** the amount of particulate TiC adjacent to abrasively stressed surface areas of the component is greater than in areas subjected to no abrasive stressing.

15. Component as defined in claim 13 or 14, **characterized in that** the component is a retaining ring for semiconductor wafers.

16. Component as defined in claim 15, **characterized in that** the wear and tear layer is essentially free from TiC particles adjacent to the surface of the retaining ring located radially inwards.

17. Process for the production of a component in accordance with any one of claims 13 to 16, **characterized by** the steps:
a) compounding the plastic material selected for the matrix with the particulate TiC;
b) preparing the compounded plastic material to form a sinterable granulate;
c) sintering the granulate obtained in step b) at a predetermined sintering temperature to form a wear and tear layer;
d) controlled cooling of the sintered material from the sintering temperature to achieve a predetermined degree of crystallization and to reduce tensions in the wear and tear layer.

18. Process for the production of a component in accordance with any one of claims 13 to 16, **characterized by** the steps:
a) compounding the plastic material selected for the matrix with the particulate TiC;
b) extruding the compounded material to form a wear and tear layer;
c) tempering the extruded wear and tear layer to achieve a predetermined degree of crystallization and to reduce tensions in the wear and tear layer.

## Revendications

1. Matériau de type matière synthétique pour la production de composants sollicités du point de vue tribologique, où le matériau de type matière synthétique comprend une matrice de matière synthétique dans laquelle est inclus TiC particulaire ayant une taille de particule moyenne dans le domaine de 1 à 2 µm, où la teneur en TiC du matériau de type matière synthétique est 3 à 30 % en masse, et où le matériau de type matière synthétique est choisi parmi la polyétheréthercétone, le poly(sulfure de phénylène), le polyparaphénylène, la polyétheréthercétone modifiée avec le PTFE, le PTFE modifié avec le PFA, la polyéthercétonecétone, un poly(téréphtalate d'alkylène), le polyimide, le polyamideimide et la polysulfone.

2. Matériau de type matière synthétique selon la revendication 1 **caractérisé en ce que** le matériau de type matière synthétique est choisi parmi la polyphénylènesulfone et la polyéthersulfone.

3. Matériau de type matière synthétique selon la revendication 1 ou 2 **caractérisé en ce que** la teneur en TiC du matériau de type matière synthétique peut atteindre 25 % en masse.

4. Matériau de type matière synthétique selon la revendication 3 **caractérisé en ce que** la teneur en TiC du matériau de type matière synthétique peut atteindre 20 % en masse.

5. Matériau de type matière synthétique selon la revendication 3 **caractérisé en ce que** la teneur en TiC du matériau de type matière synthétique est 20 à 25 % en masse.

6. Matériau de type matière synthétique selon l'une des revendications précédentes **caractérisé en ce que** le TiC particulaire présente une taille de particule moyenne de 1,2 à 1,4 µm.

7. Matériau de type matière synthétique selon l'une des revendications précédentes **caractérisé en ce que** le TiC particulaire présente une couche promotrice d'adhésion sur la surface des particules.

8. Matériau de type matière synthétique selon la revendication 7 **caractérisé en ce que** la couche promotrice d'adhésion comprend un polymère organique.

9. Matériau de type matière synthétique selon l'une des revendications 1 à 8 **caractérisé en ce que** les particules de TiC sont partiellement fluorées.

10. Matériau de type matière synthétique selon l'une des revendications précédentes **caractérisé en ce que** les particules de TiC sont des particules granulaires.

11. Matériau de type matière synthétique selon l'une des revendications précédentes **caractérisé en ce que** les particules de TiC présentent une surface lisse.

12. Matériau de type matière synthétique selon la revendication 1 **caractérisé en ce qu'**une matière synthétique auto-renforçante, en particulier le polyparaphénylène, est choisie comme matériau de type matière synthétique pour la matrice et **en ce que** la teneur en particules de TiC est 3 à 8 % en masse.

13. Composant ayant une couche d'usure produit au moyen d'un matériau de type matière synthétique selon l'une des revendications 1 à 12.

14. Composant selon la revendication 13 **caractérisé en ce que** la teneur en TiC particulaire au voisinage des domaines superficiels du composant chargés du point de vue abrasif est plus élevée que dans les domaines qui ne sont exposés à aucune charge abrasive.

15. Composant selon l'une des revendications 13 à 14 **caractérisé en ce que** le composant est une bague de retenue pour plaquettes à semi-conducteurs.

16. Composant selon la revendication 15 **caractérisé en ce que** la couche d'usure est sensiblement dépourvue de particules de TiC au voisinage de la surface de la bague de retenue située radialement à l'intérieur.

17. Procédé de production d'un composant selon l'une des revendications 13 à 16 **caractérisé par** les étapes :
a) combinaison du matériau de type matière synthétique choisi pour la matrice avec le TiC particulaire ;
b) transformation du matériau de type matière synthétique combiné en granulés susceptibles de frittage ;
c) frittage des granulés obtenus dans l'étape b) à une température de frittage prédéterminée en une couche d'usure ;
d) refroidissement commandé du matériau fritté depuis la température de frittage pour obtenir un degré de cristallisation prédéterminé et pour supprimer les tensions dans la couche d'usure.

18. Procédé de production d'un composant selon l'une des revendications 13 à 16 **caractérisé par** les étapes :
a) combinaison du matériau de type matière synthétique choisi pour la matrice avec le TiC particulaire ;
b) extrusion du matériau combiné en une couche d'usure ;
c) recuit de la couche d'usure extrudée pour obtenir un degré de cristallisation prédéterminé et pour supprimer les tensions dans la couche d'usure.
